# EUROPEAN PATENT SPECIFICATION

(11) **EP 4 231 430 B1**
(45) Date of publication and mention of the grant of the patent: **08.04.2026**
(21) Application number: 22788482.2
(22) Date of filing: 14.04.2022
(51) Int. Cl.: H01M 50/375, H01M 50/342, H01M 50/178, H01M 50/105, H01M 50/193, H01M 50/198

(54) **SECONDARY BATTERY**
SEKUNDÄRBATTERIE
BATTERIE SECONDAIRE

(30) Priority: 14.04.2021 KR 20210048824; 22.11.2021 KR 20210161761
(43) Date of publication of application: 23.08.2023
(73) Proprietor: LG Energy Solution, Ltd., Seoul 07335 (KR)
(72) Inventor: LIM, Hun-Hee, Daejeon 34122 (KR); KIM, Sang-Hun, Daejeon 34122 (KR); KANG, Min-Hyeong, Daejeon 34122 (KR); SONG, Dae-Woong, Daejeon 34122 (KR); YU, Hyung-Kyun, Daejeon 34122 (KR); HWANG, Soo-Ji, Daejeon 34122 (KR)
(74) Representative: Plasseraud IP
(86) International application number: PCT/KR2022/005441
(87) International publication number: WO 2022/220627

(56) References cited:
- KR-A- 20030 066 895
- KR-A- 20110 131 259
- KR-A- 20160 118 585
- KR-A- 20190 023 648
- KR-A- 20190 047 104
- US-A1- 2012 231 307
- US-A1- 2018 114 964

## Description

### TECHNICAL FIELD

The present application claims priority to Korean Patent Application No. 10-2021-0048824 filed on April 14, 2021 and Korean Patent Application No. 10-2021-0161761 filed on November 22, 2021.

The present disclosure relates to a secondary battery, and more particularly, to a secondary battery having a vent member.

### BACKGROUND ART

Secondary batteries are highly applicable to various products and exhibit superior electrical properties such as high energy density, etc. Secondary batteries are commonly used not only in portable devices but also in electric vehicles (EVs) or hybrid electric vehicles (HEVs) driven by electrical power sources. The secondary battery is drawing attention as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like.

The secondary battery generally has a structure in which an electrode assembly including at least one unit cell having a positive electrode/separator/negative electrode structure is accommodated in a battery case of a laminate sheet in which an outer layer, a metal barrier layer and a sealant layer are sequentially laminated, and a sealant resin of the sealant layer is fused to seal the electrode assembly is sealed.

In the conventional secondary battery, the battery may ignite due to various causes such as a short circuit inside the secondary battery, overcharge or overdischarge, temperature control, or the like. At this time, thermal propagation where the temperature inside the secondary battery rises rapidly and simultaneously the heat is transferred to neighboring cells may be generated, which may further increase the fire.

In order to minimize damage to the electrode caused by gas when thermal propagation occurs - *i.e.,* when the internal temperature of the secondary battery rises, directional venting characteristic is required to discharge the gas in one direction. However, the conventional secondary battery has a problem in that it is difficult to induce gas discharge in a specific direction.

Therefore, the present disclosure is directed to providing a secondary battery with improved safety by inducing gas discharge in a specific direction.

US2012/231307 relates to a secondary battery including an electrode assembly including a first electrode tab and a second electrode tab, and a case accommodating the electrode assembly such that the electrode tab is exposed to the outside, the first and second electrode tabs having a recess formed lengthwise on at least one of top and bottom surfaces of the at least one of the first and second electrode tabs, and a safety film being positioned in the recess.

### DISCLOSURE

### Technical Problem

Therefore, the present disclosure is directed to providing a secondary battery with improved safety by inducing gas discharge in a specific direction.

### Technical Solution

To solve the above-described technical problem, disclosed herein are secondary batteries according to following embodiments.

A secondary battery according to this aspect, comprises an electrode assembly;
an electrode lead attached to the electrode assembly;
a battery case including an accommodation portion to receive the electrode assembly therein such that a portion of the electrode lead extends outside the battery case, the battery case including a sealing portion containing a sealant resin to form a seal at least partially around the electrode assembly;
a lead film disposed around an outer surface of the electrode lead, the lead film being interposed between the electrode lead and the sealing portion, and
a vent member containing a vent resin having a lower melting point than the sealant resin, the vent member at least partially overlapping or contacting the lead film.

Continuing in accordance with this aspect, the vent member may be spaced apart from the electrode lead by a predetermined distance.

Continuing in accordance with this aspect, the vent member is at least partially disposed within the sealing portion and extend to the accommodation portion. The vent member is spaced apart from the lead film in the sealing portion. The vent member is at least partially overlapping or contacting the lead film in the accommodation portion.

Continuing in accordance with this aspect, the electrode lead may extend away from the battery case along a Y-axis. The vent member may include a first portion and a second portion. The first portion may extend along an X-axis orthogonal to the Y-axis between the lead film and the second portion. The second portion may extend along the Y-axis. The vent member may define an L shape. The vent member may include a tapering section at an intersection of the first and second portions. The tapering section may extend into the accommodation portion. The first portion may at least partially overlap or contact the lead film. An outer end of the first portion may be spaced apart from a inner end of the sealing portion adjacent a region where the electrode lead extends away from the battery case. The first portion may be located in the accommodation portion. The second portion may not overlap or contact the lead film. The second portion may define a variable width. The variable width may narrow along the Y-axis. The second portion may define any of a circular, oval, stepped, triangular and trapezoidal shape. The second portion may define a variable thickness. The variable thickness may decrease along the Y-axis.

Continuing in accordance with this aspect, a region of the vent member overlapping or contacting the lead film may be 1% to 30% of a region of the lead film not overlapping the electrode lead.

Continuing in accordance with this aspect, the vent resin may contain a linear low-density polyethylene having a comonomer with a carbon number of 6 or more. The linear low-density polyethylene having a comonomer with a carbon number of 6 or more may be polymerized in the presence of a metallocene catalyst. A content of the comonomer with a carbon number of 6 or more may be 15 weight% or less, based on 100 weight% of the linear low-density polyethylene. A content of the comonomer with the carbon number of 6 or more may be from 5 weight% to 15 weight% based on 100 weight% of the linear low-density polyethylene.

Continuing in accordance with this aspect, the vent member may melt at 100°C to 120°C to vent gases from the accommodation portion to an exterior of the secondary battery. The vent member may be vented at a pressure of 1.5 atm or above.

Continuing in accordance with this aspect, the vent member may have a maximum sealing strength of less than 6 kgf/15 mm at 100°C or above.

Continuing in accordance with this aspect, the vent member may have an average sealing strength of less than 4.5 kgf/15 mm at 100°C or above.

Continuing in accordance with this aspect, the vent member may have a maximum sealing strength of 6 kgf/15 mm or more at room temperature to 60°C.

Continuing in accordance with this aspect, the vent member may have an average sealing strength of 4.5 kgf/15 mm or more at room temperature to 60°C.

Continuing in accordance with this aspect, the vent resin may have a poly dispersity index (PDI) of 4 or less.

Continuing in accordance with this aspect, the vent resin may have a poly dispersity index (PDI) of from 1 to 4.

Continuing in accordance with this aspect, a difference between a crystallization temperature of the sealant resin and a crystallization temperature of the vent resin may be 10°C or less.

Continuing in accordance with this aspect, the vent resin may have a melting point of 100°C to 130°C.

Continuing in accordance with this aspect, the vent resin may have a weight-average molecular weight of 100,000 g/mol to 400,000 g/mol.

Continuing in accordance with this aspect, the secondary battery may be a pouch-type secondary battery.

Continuing in accordance with this aspect, the vent member may have a maximum sealing strength of less than 6 kgf/15 mm at 100°C to 120°C.

Continuing in accordance with this aspect, the vent member may have an average sealing strength of less than 4.5 kgf/15 mm at 100°C to 120°C.

Continuing in accordance with this aspect, the vent member may have a maximum sealing strength of less than 3 kgf/15 mm at 120°C or more.

Continuing in accordance with this aspect, the vent member may have an average sealing strength of less than 2 kgf/15 mm at 120°C or more.

### Advantageous Effects

A secondary battery according to an embodiment of the present disclosure may include a vent member containing a vent resin having a lower melting point than the sealant resin of the battery case, thereby inducing gas to be discharged toward the vent member. Accordingly, the safety of the battery may be improved.

The secondary battery according to an embodiment of the present disclosure may minimize the amount of gas vented to directly contact the electrode lead, thereby further improving the safety of the battery.

Since the secondary battery according to an embodiment of the present disclosure includes the vent member having a region that may partially overlap or contact the lead film, the vent member can be conveniently and accurately positioned in the secondary battery.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings shown herein.
FIG. 1 is a plan view of a secondary battery according to an embodiment of the present disclosure.
FIG. 2 is partially enlarged plan view showing a portion A of the secondary battery of FIG. 1.
FIG. 3 is a schematic diagram showing vent formation in the secondary battery according to an embodiment of the present disclosure.
FIG. 4 is a partially enlarged plan view showing a lead film and a vent member of a secondary battery according to another embodiment of the present disclosure.
FIG. 5 is a partially enlarged plan view showing a lead film and a vent member of a secondary battery according to another embodiment of the present disclosure.
FIG. 6 is a partially enlarged plan view showing a lead film and a vent member of a secondary battery according to another embodiment of the present disclosure.
FIG. 7 is a partially enlarged plan view showing a lead film and a vent member of a secondary battery according to another embodiment of the present disclosure.
FIG. 8A is a sectional view of a vent member taken along a line B-B of FIG. 2 according to an embodiment of the present disclosure.
FIG. 8B is a sectional view of a vent member taken along a line B-B of FIG. 2 according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

A secondary battery according to an embodiment of the present disclosure includes an electrode assembly to which an electrode lead is attached, a battery case including an accommodation portion for accommodating the electrode assembly to expose a part of the electrode lead to the outside and a sealing portion containing a sealant resin and formed to seal the electrode assembly, a lead film configured to surround a part of an outer surface of the electrode lead and interposed between the electrode lead and the sealing portion of the battery case, and a vent member containing a resin having a lower melting point than the sealant resin and having a region that is at least partially overlaps or contacts the lead film.

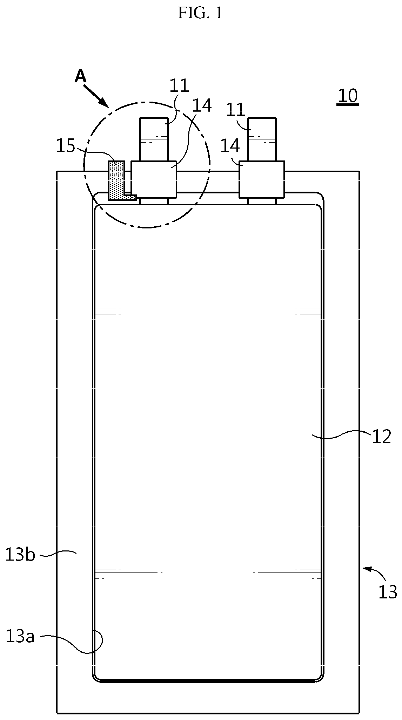

FIG. 1 shows a secondary battery 10 according to an embodiment of the present disclosure. Secondary battery 10 includes an electrode assembly 12 to which an electrode lead 11 is attached, and a battery case 13.

The electrode assembly 12 includes a positive electrode plate, a negative electrode plate and a separator. In the electrode assembly 12, a positive electrode plate and a negative electrode plate may be sequentially laminated with a separator being interposed therebetween. The positive electrode plate may include a positive electrode current collector made of a metal thin film having excellent conductivity - for example, an aluminum (Al) foil, and a positive electrode active material layer coated on at least one surface thereof. In addition, the positive electrode plate may include a positive electrode tab made of a metal material - for example, an aluminum (Al) material, at one side end thereof. The positive electrode tab may protrude from one side end of the positive electrode plate. The positive electrode tab may be welded to one side end of the positive electrode plate, or be bonded thereto using a conductive adhesive.

The negative electrode plate may include a negative electrode current collector made of a conductive metal thin film - for example, a copper (Cu) foil, and a negative electrode active material layer coated on at least one surface thereof. **In** addition, the negative electrode plate may include a negative electrode tab formed of a metal material - for example, a copper (Cu) or nickel (Ni) material, at one side end thereof. The negative electrode tab may protrude from one side end of the negative electrode plate. The negative electrode tab may be welded to one side end of the negative electrode plate, or be bonded thereto using a conductive adhesive.

The separator is interposed between the positive electrode plate and the negative electrode plate to electrically insulate the positive electrode plate and the negative electrode plate from each other. The separator may be a porous membrane so that lithium ions can pass between the positive electrode plate and the negative electrode plate. The separator may include, for example, a porous membrane using polyethylene (PE), or polypropylene (PP), or a composite film thereof.

An inorganic coating layer may be provided on the surface of the separator. The inorganic coating layer may have a structure in which inorganic particles are bonded to each other by a binder to form an interstitial volume between the particles.

The electrode assembly 12 may be a jelly-roll (winding-type) electrode assembly having a structure in which long sheet-type positive and negative electrodes are wound with a separator being interposed therebetween, a stacked (stack-type) electrode assembly having a structure in which a plurality of positive and negative electrodes cut into units of a predetermined size are sequentially stacked with a separator being interposed therebetween, a stack/folding type electrode assembly having a structure in which bi-cells or full-cells where positive and negative electrodes of a predetermined unit are stacked with a separator being interposed therebetween are wound, or the like.

The battery case 13 includes an accommodation portion 13a for accommodating the electrode assembly 12, and a sealing portion 13b containing a sealant resin to form a seal around the electrode assembly 12 as shown in FIG. 1.

In an embodiment of the present disclosure, the battery case 13 may be provided in a film form having a multilayer structure including an outer layer for protection against external impacts, a metal barrier layer for blocking moisture, and a sealant layer for sealing the battery case.

The outer layer may include a polyester-based film using polyethylene terephthalate (PET), polybutylene terephthalate, polyethylene naphthalate, polybutylene naphthalate, copolyester, polycarbonate, nylon, or the like, and may be configured in a single layer or multiple layers. The metal barrier layer may include aluminum, copper, or the like. The sealant layer may be configured in a single layer or multiple layers.

The sealant resin may include polypropylene (PP), acid-modified polypropylene (PPa), random polypropylene, ethylene propylene copolymer, or two or more thereof. The ethylene propylene copolymer may include, but is not limited to, ethylene-propylene rubber, ethylene-propylene block copolymer, and the like.

In an embodiment of the present disclosure, the battery case 13 may be in a pouch form. The pouch-type battery case 13 may include an upper pouch and a lower pouch. When the battery case 13 includes an upper pouch and a lower pouch, after the upper pouch and the lower pouch are positioned so that the sealant resins thereof face each other, the facing sealant resins are fused with each other by heat and pressure to seal the battery.

The sealing portion 13b refers to a portion that is fused along the outer circumferential surface of the accommodation portion 13a to seal the electrode assembly 12. The fusion may be thermal fusion, ultrasonic fusion, or the like, but is not particularly limited as long as the sealing portion can be fused.

The sealing portion 13b may be sealed on four or three peripheral sides of the battery case 13 in some embodiments. In the three-sided sealing structure, after the upper pouch and the lower pouch are formed on one pouch sheet, the boundary surface between the upper pouch and the lower pouch is bent so that the electrode assembly accommodation portions 13a formed on the upper pouch and the lower pouch overlap, and in this state, the edges of the remaining three sides are sealed except for the bending portion.

The electrode lead 11 is accommodated in the battery case 13 so that a part thereof is exposed to the outside of the battery case 13 as shown in FIG. 1.

Secondary battery 10 according to an embodiment of the present disclosure includes a lead film 14. The lead film 14 surrounds a part of the outer surface of the electrode lead 11. The lead film 14 is interposed between the electrode lead 11 and the sealing portion 13b of the battery case 13 in a region where the electrode lead 11 protrudes or extends away from battery case 13 to help binding of the electrode lead 11 and the sealing portion 13b of the battery case 13.

Referring to FIG. 1, the secondary battery 10 according to an embodiment of the present disclosure includes a vent member 15 having a region at least partially overlapping or contacting the lead film 14. When thermal propagation occurs, the vent member 15 may induce gases to be discharged in a specific direction, thereby improving the safety of the battery.

In the present disclosure, the vent member 15 contains a vent resin having a lower melting point than the sealant resin. Since the vent member contains the vent resin having a lower melting point than the sealant resin of the battery case, the vent member 15 melts before the sealant resin at high temperatures. The sealing strength of the portion where the vent member 15 is inserted is less than the sealing strength of the case portion containing the sealant resin at high temperature, so that the venting characteristic may be readily implemented.

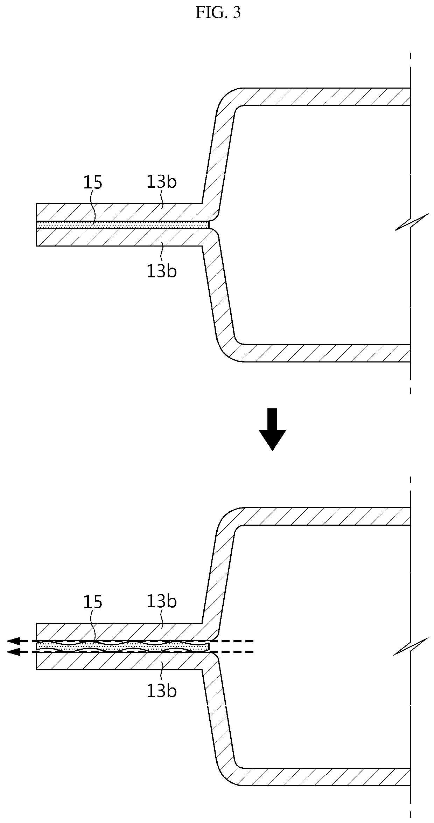

FIG. 3 is a schematic diagram showing a vent formation in the secondary battery according to an embodiment of the present invention. Specifically, FIG. 3 is a cross-sectional view showing the vent member in the secondary battery according to an embodiment of the present invention.

Referring to FIG. 3, at a temperature at which the battery normally operates, the vent member 15 serves to seal the case 13 from the outside. If the temperature of the battery increases due to abnormal operation of the battery, the sealing strength of the portion into which the vent member 15 is inserted is reduced as the vent member 15 is melted. Accordingly, as the sealing strength of the portion into which the vent member 15 is inserted is lowered, the vent may be formed at this location. For example, as the pressure of the gas inside the battery is concentrated at the interface between the vent member 15 and the case 13, a gap or vent is formed between the vent member and the case to discharge gases from the secondary battery.

The vent member 15 can be attached to the case 13 by thermal fusion. In another example, the vent member 15 can be attached to the case 13 by an adhesive such as glue. In another example, the vent member 15 and the case 13 may be physically coupled to each other by means of a clip or the like. In another example, at least a part of the vent member 15 may be embedded in a film constituting the case 13, for example a sealant resin.

Referring to FIG. 1, the vent member 15 is positioned to have a region that at least partially overlaps or contacts the lead film 14. As the vent member 15 has at least a partial region that overlaps or contacts the lead film 14, it is easy to consistently and readily fix the position of the vent member 15. For example, when the vent member 15 is inserted and then fused, since a part of the vent member 15 overlaps or contacts the lead film 14, the vent member 15 may be inserted at a predetermined position and then fused.

In an embodiment of the present disclosure, the vent member 15 may be located in the sealing portion at a side where the electrode lead 11 is exposed to the outside as shown in FIG. 1. The vent member 15 may be located inside the sealing portion 13b. Alternatively, the vent member 15 is located inside the sealing portion 13b partially and extends 2 to the accommodation portion 13a. Alternatively, the vent member 15 may extend outside the case 13 through the accommodation portion 13a via the sealing portion 13b.

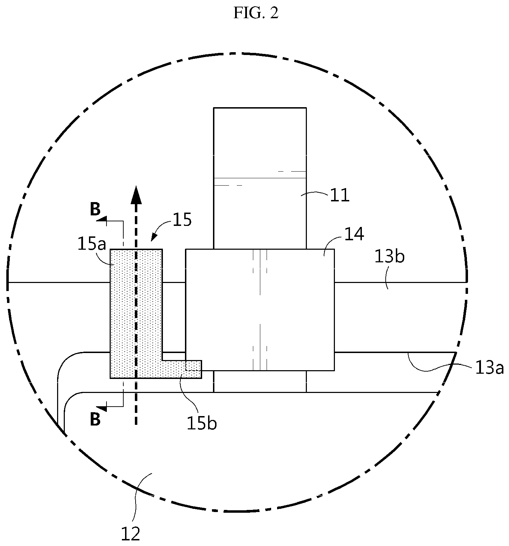

The vent member 15 may be positioned to be spaced apart from the electrode lead 11 by a predetermined distance. Accordingly, it is easier to minimize the amount of gas vented in a direction that may directly contact the electrode lead 11, namely toward the side portion of the electrode lead 11, thereby further improving the safety of the battery. As shown by a directional arrow representing gas exhaust direction in FIG. 2, gas exhaust is directed away from electrode lead 11. The electrode lead 11 temperature may rise rapidly in abnormal situations such as overcharge or internal short circuit. Therefore, if direct contact between the vented gas and the electrode lead 11 is minimized, secondary battery safety may be improved.

In another embodiment of the present disclosure, the vent member 15 may be positioned in the sealing portion 13b at a corner of the battery case 13 adjacent to electrode lead 11. As the vent member 15 is positioned in the above-mentioned portion, the amount of gas vented toward a side portion of the electrode lead 11 may be minimized, thereby further improving the safety of the battery.

In an embodiment of the present disclosure, the vent member 15 is spaced apart from the lead film 14 in the sealing portion 13b, and the vent member 15 at least partially overlaps or contacts the lead film 14 in the accommodation portion 13a. As the vent member 15 does not overlap or contact the lead film 14 in the sealing portion 13b *- i.e.,* vent member 15 being located away from the electrode lead 11, the amount of gas vented toward the side portion of electrode lead 11 may be minimized, thereby further improving safety of the battery.

Referring to FIG. 2, when a protruding direction of the electrode lead 11 is set as a Y-axis and the direction orthogonal to the Y-axis is set an X-axis, the vent member 15 may include a first portion such as a bridge portion 15b extending in the X-axis direction, and a second portion such as a body portion 15a extending in the Y-axis direction.

In an embodiment of the present disclosure, the vent member 15 may have an L shape as shown in Fig. 2.

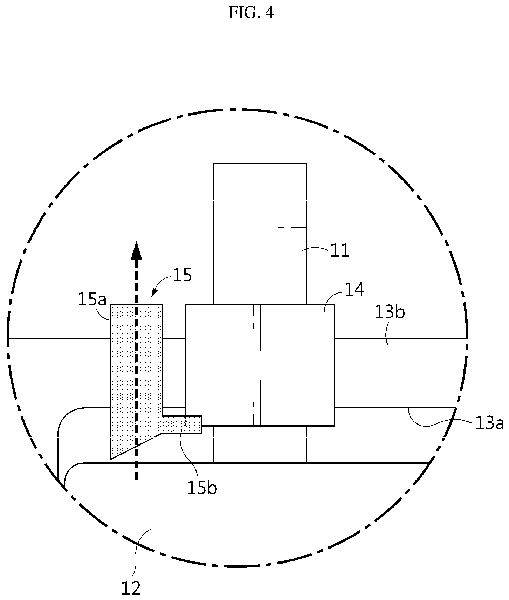

In another embodiment of the present disclosure, the vent member 15 may be configured such that a inner end of the second portion 15a is cut as shown in FIG. 4 to form a tapering section. For example, the second portion 15a may be cut in a direction non-orthogonal to the Y-axis. If the vent member 15 is shaped as above, it is easier to prevent the electrode assembly 12 inside the accommodation portion 13a from contacting the inner end - i.e., the tapering section, of the second portion 15a.

Here, a vent may occur substantially in the second portion 15a, and a vent may not substantially occur in the first portion 15b.

In an embodiment of the present disclosure, the first portion 15b may have a rectangular shape. For example, a long side of the first portion may be positioned in the X-axis direction and a short side of the first portion may be positioned in the Y-axis direction.

In an embodiment of the present disclosure, the second portion 15a may have a rectangular shape. For example, a short side of the second portion may be positioned in the X-axis direction and a long side of the second portion may be positioned in the Y-axis direction.

Referring to FIG. 2, the first portion 15b may at least partially overlap or contact the lead film 14.

A part of the first portion 15b and a part of the lead film 14 may be overlapped or made to contact each other through thermal fusion. In another example, a part of the first portion 15b and a part of the lead film 14 may be overlapped or made to contact each other through an adhesive such as glue. In another example, a part of the first portion 15b and a part of the lead film 14 may be physically coupled to each other through a clip or the like. In another example, a part of the first portion 15b may be embedded in a film constituting the lead film 14.

Referring to FIG. 2, the second portion 15a of the vent member 15 and the lead film 14 may not overlap or contact each other. For example, the second portion 15a and the lead film 14 may not overlap or contact each other in the sealing portions 13b. When the second portion 15a of the vent member 15 and the lead film 14 do not overlap or contact each other, the amount of gas vented toward the side portion of the electrode lead 11 may be minimized, thereby further improving the safety of the battery.

In an embodiment of the present disclosure, a region where the vent member overlaps or contacts the lead film may be 1% to 30%, or 1.3% to 23%, or 1.5% to 12%, or 2% to 9% of a region where the lead film does not overlap or contact the electrode lead. Here, the region where the lead film does not overlap the electrode lead refers to the sum of both regions of the electrode lead and the lead film that do not overlap.

Referring to FIG. 2, the outer end of the first portion 15b may be spaced apart from a inner end of the sealing portion 13b in a region where the electrode lead 11 protrudes. Here, the "outer end of the first portion of the vent member" refers to an end of the first portion 15b that is closer to the sealing portion 13b. The "inner end of the sealing portion" refers to an end of the sealing portion that is close to the accommodation portion 13a. When the outer end of the first portion 15b is spaced apart from the inner end of the sealing portion 13b in a region where the electrode lead 11 protrudes, the entire first portion 15b is located in the accommodation portion 13a. Accordingly, the gap or space between the first portion 15b and the sealing portion 13b is exposed to the accommodation portion 13a, and as a result, the gas pressure is concentrated at this gap or space to enable faster venting in an abnormal situation.

In an embodiment of the present disclosure, the second portion 15a may have a structure that is narrowed along the protruding direction of the electrode lead 11. The width of the second portion 15a may be narrowed continuously or discontinuously along the protruding direction of the electrode lead 11. If the second portion 15a has a structure that is narrowed along the protruding direction of the electrode lead 11, an exhaust angle of the vented gas is reduced to minimize the amount of gas vented toward the side portion of the electrode lead 11, thereby further improving the safety of the battery.

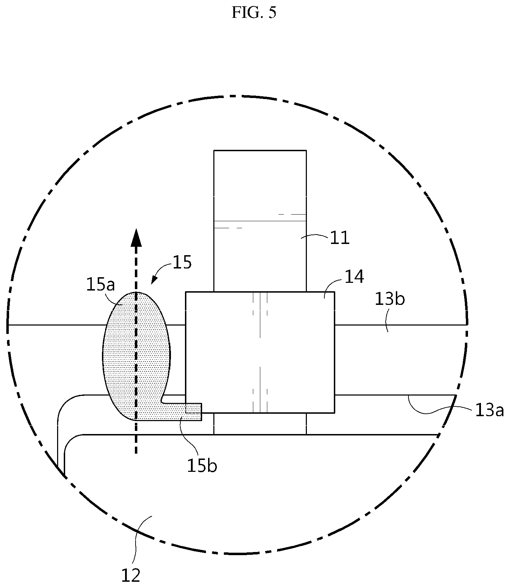

FIGS. 5 to 7 are partially enlarged views showing a lead film 14 and a vent member 15 in a secondary battery 10 according to other embodiments of the present disclosure.

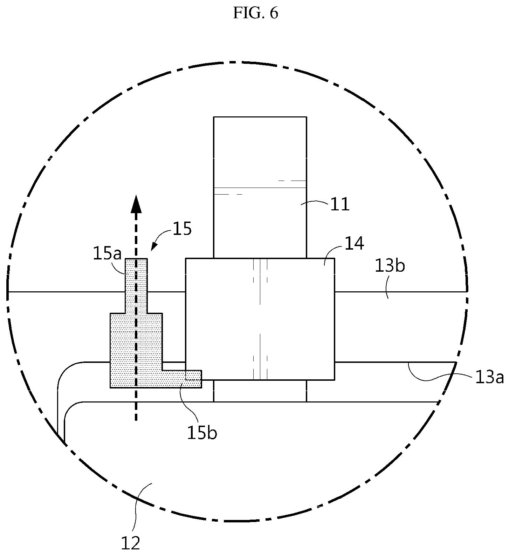

Referring to FIGS. 5 and 6, the second portion 15a may have, for example, an oval or a stepped shape. However, the shape of the second portion 15a may define other shapes such as a circle, a triangle, a trapezoid, etc.

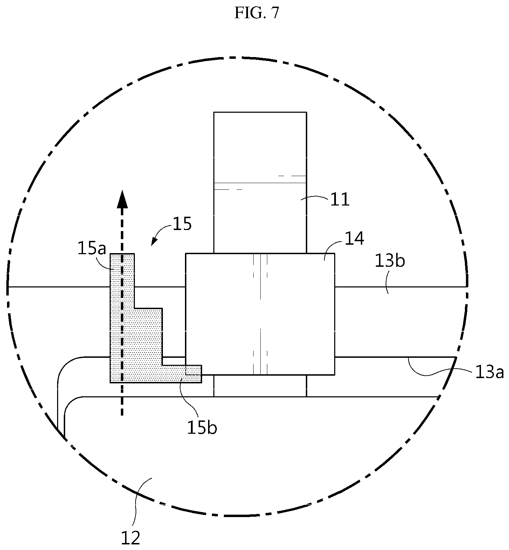

As shown in FIG. 7, the second portion 15a may be an asymmetric stepped structure. In the asymmetric stepped structure, an offset between the steps may be formed such that the direct contact between the vented gas and the electrode lead 11 can be minimized. For example, the size (exhaust angle of vented gases) and location (distance from electrode lead 11) of a discharge end of vent member 15 may be configured to minimize contact of the vented gases with electrode lead as best shown in FIG. 7. Thus, reducing the size of the discharge end of the vent member to direct gases away from electrode lead 11 and locating the discharge end away from the electrode lead will minimize any contact between the vented gases and the electrode lead. In this case, an exhaust direction of the vented gas may be further separated from the side portion of the electrode lead 11 as shown in FIG. 7.

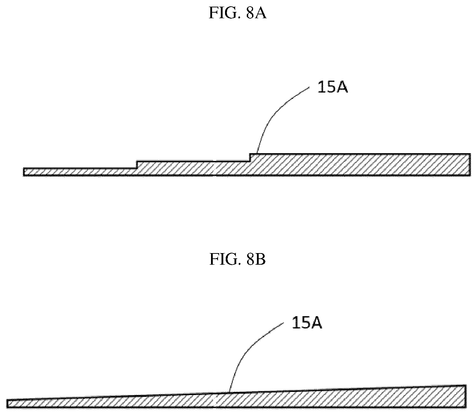

In an embodiment of the present disclosure, a thickness of the second portion 15a may decrease continuously or discontinuously along the protruding direction of the electrode lead 11 as shown in FIG. 8A and 8B.

FIGS. 8A and 8B are sectional views of vent members 15, taken along the line B-B of FIG. 2.

Referring to FIG. 8A, a variable thickness of the second portion 15a may be reduced discontinuously along a stepped shape. FIG. 8B shows another embodiment of a vent member 15 with variable thickness, the thickness of the second portion 15a being reduced continuously.

In an embodiment of the present disclosure, the vent resin having a lower melting point than the sealant resin may contain linear low-density polyethylene having a comonomer with a carbon number of 6 or more. As the vent resin contains linear low-density polyethylene having a comonomer with a carbon number of 6 or more, excellent fusion with the sealant resin may be secured in the normal temperature range, and the sealing strength of the sealing portion 13b of the battery case in which the vent member 15 is inserted may b e lowered at high temperatures to realize or trigger venting.

In an embodiment of the present disclosure, the vent resin having a lower melting point than the sealant resin may contain linear low-density polyethylene having a comonomer with a carbon number of 6 to 8.

In an embodiment of the present disclosure, the vent resin having a lower melting point than the sealant resin may have a melting point of 100°C to 130°C, or 105°C to 125°C, or 110°C to 120°C. If the melting point of the vent resin satisfies the above-mentioned range, the sealing strength of the sealing portion 13b of the battery case in which the vent member 15 is inserted may be lowered at a high temperature, for example 100°C or higher, so that the venting characteristic may be readily implemented.

The melting point of the vent resin having a lower melting point than the sealant resin may be measured using a differential scanning calorimeter (DSC). For example, the temperature of a sample is increased from 30°C to 280°C at 10°C/min, maintained at 280°C for 10 minutes, cooled to 30°C at 10°C/min, and then maintained at 30°C for 10 minutes. Then, after increasing the temperature of the sample from 30°C to 280°C at 10°C/min, the melting point may be measured by maintaining the temperature at 280°C for 10 minutes.

In an embodiment of the present disclosure, the vent member 15 may be vented at 100°C to 120°C to expel or exhaust gases from the accommodation portion to outside the secondary battery. In particular, the vent member 15 may be vented at 100°C to 120°C and at a pressure of 1.5 atm or more. As the vent member 15 is vented in the aforementioned temperature range and/or the aforementioned pressure condition, it is easier to seal the battery during normal operation of the battery and to induce the gas to be discharged only during abnormal operation of the battery.

In an embodiment of the present disclosure, the vent member may have a maximum sealing strength of less than 6 kgf/15 mm or less than 5 kgf/15mm or less than 4.5 kgf/15mm at 100°C or higher. In an embodiment of the present disclosure, the vent member 15 may have a maximum sealing strength of less than 6 kgf/15 mm or less than 5 kgf/15mm or less than 4.5 kgf/15mm at 100°C to 120°C. In an embodiment of the present disclosure, the vent member 15 may have a maximum sealing strength of less than 3 kgf/15 mm or less than 2 kgf/15 mm or less than 1 kgf/15 mm or less than 0.5 kgf/15 mm at 120°C or higher. If the vent member satisfies the above-mentioned sealing strength in the above-mentioned temperature range, the sealing strength of the sealing portion 13b of the battery case in which the vent member 15 is inserted may be lowered at a high temperature, for example 100°C or higher, so that the vent characteristic may be readily implemented.

In an embodiment of the present disclosure, the vent member may have a maximum sealing strength of 6 kgf/15 mm or more or 8 kgf/15 mm or more or 10 kgf/15 mm or more at room temperature to 60°C. If the vent member satisfies the above-mentioned sealing strength in the above temperature range, excellent sealing strength may be achieved during normal operation of the battery, which may easily secure the sealing property of the battery.

In an embodiment of the present disclosure, the vent member may have a maximum sealing strength of less than 6 kgf/15 mm at 100°C or higher. The vent member may have a maximum sealing strength of 6 kgf/15 mm or more at room temperature to 60°C. If the vent mebmer satisfies the sealing strength described above, the sealing strength of the sealing portion 13b of the battery case in which the vent member 15 is inserted may be lowered at a high temperature, so that the vent characteristic may be readily implemented. In addition, since excellent sealing strength may be achieved during normal operation of the battery, the sealing property of the battery may be easily secured.

In an embodiment of the present disclosure, the vent member may have an average sealing strength of less than 4.5 kgf/15 mm or less than 3 kgf/15 mm at 100°C or above. In an embodiment of the present disclosure, the vent member 15 may have an average sealing strength of less than 4.5 kgf/15 mm or less than 3 kgf/15 mm at 100°C to 120°C. In an embodiment of the present disclosure, the vent member 15 may have an average sealing strength of less than 2 kgf/15 mm or less than 1 kgf/15 mm or less than 0.5 kgf/15 mm at 120°C or higher. If the vent member satisfies the above-mentioned sealing strength in the above-mentioned temperature range, the sealing strength of the sealing portion 13b of the battery case in which the vent member 15 is inserted may be lowered at a high temperature, so that the vent characteristic may be implemented more easily.

In an embodiment of the present disclosure, the vent member may have an average sealing strength of 4.5 kgf/15 mm or more or 5 kgf/15 mm or more or 6 kgf/15mm or more or 7 kgf/15 mm or more at room temperature to 60°C. If the vent member satisfies the above-mentioned sealing strength in the above temperature range, excellent sealing strength may be secured during normal operation of the battery, thereby easily securing the sealing property.

In an embodiment of the present disclosure, the vent member may have an average sealing strength of less than 4.5 kgf/15 mm at 100°C or above. The vent member may have an average sealing strength of 4.5 kgf/15 mm or more at room temperature to 60°C. If the vent member has the above-mentioned sealing strength in the above-described temperature range, the sealing strength of the sealing portion 13b of the battery case in which the vent member 15 is inserted may be lowered at a high temperature, so that the vent characteristic may be easily implemented. In addition, since excellent sealing strength may be secured during normal operation of the battery, the sealing property of the battery may be easily secured.

The sealing strength of the vent member according to temperature may be measured by conducting a tensile test at a speed of 5 mm/min, after cutting the part of the battery case of the sealing portion where the vent member is inserted into a width of 15 mm and a length of 5 cm and then gripping both ends thereof using a UTM jig in a state where both ends are spread to 180°.

At this time, the maximum sealing strength means a maximum value when the battery case is broken, and the average sealing strength means an average value when the battery case is stretched by 8 mm at 4.5 kgf/15 mm when the maximum sealing strength is 4.5 kgf/15 mm or more and an average value when the battery case is stretched by 8 mm at the maximum sealing strength when the maximum sealing strength is less than 4.5 kgf/15 mm.

In an embodiment of the present disclosure, the linear low-density polyethylene having a comonomer with a carbon number of 6 or more may be polymerized in the presence of a metallocene catalyst. If the linear low-density polyethylene having a comonomer with a carbon number of 6 or more is polymerized in the presence of a metallocene catalyst, it may be more advantageous in terms of sealing strength and properties, compared to the case where it is polymerized in the presence of a Ziegler-Natta catalyst.

In an embodiment of the present disclosure, the content of the comonomer with a carbon number of 6 or more in the linear low-density polyethylene having a comonomer with a carbon number of 6 or more may be 15 weight% or less, or 12 weight% or less, or 11.8 weight% or less, or 10 weight% or less, or 9 weight% or less, or 8 weight% or less, or 7.6 weight% or less, based on 100 weight% of the linear low-density polyethylene having a comonomer with a carbon number of 6 or more. At the same time, it may be 5 weight% or more, or 7.6 weight% or more, or 8 weight % or more, or 9.0 weight% or more, or 10 weight% or more, or 11.8 weight% or more, or 12 weight% or more. If the content of the comonomer with a carbon number of 6 or more satisfies the above-mentioned range, it may be easy to ensure that the sealing strength is not lowered during normal operation of the battery due to a decreased packing density between molecules.

The content of the comonomer with a carbon number of 6 or more may be measured using an H-NMR. For example, after about 10 mg of a sample is completely dissolved in about 0.6 mL of trichloroethylene solvent using a heat gun, it may be sampled in an NMR tube and measured using the 1H-NMR or 13C-NMR analysis method.

In an embodiment of the present disclosure, the vent resin having a lower melting point than the sealant resin may have a weight-average molecular weight of 100,000 g/mol to 400,000 g/mol, or 200,000 g/mol to 350,000 g/mol, or 230,000 g/mol to 300,000 g/mol. If the weight-average molecular weight of the vent resin satisfies the above-described range, the sealing strength with the sealant resin may be improved during normal operation of the battery.

In an embodiment of the present disclosure, the vent resin having a lower melting point than the sealant resin may have a poly dispersity index (PDI) of 4 or less, or 3.8 or less, or 3.796 or less, or 3.5 or less, or 3.023 or less, or 3 or less, or 2.7 or less, or 2.674 or less. In addition, the poly dispersity index (PDI) may be 1.0 or more. If the poly dispersity index of the vent resin satisfies the above range, the molecular weight distribution is narrow, so the sealing strength with the sealant resin and the properties may be more excellent during normal operation of the battery.

The weight-average molecular weight and the poly dispersity index of the vent resin having a lower melting point than the sealant resin may be measured by gel permeation chromatography (GPC) under the following conditions:
- column: Tosoh, HLC-8321 GPC/HT
- solvent: TCB (Trichlorobenzene) + 0.04% BHT (after drying with 0.1% CaCl₂)
- flow velocity: 1.0 ml/min
- sample concentration: 1.5 mg/ml
- dose: 300 µl
- column temperature: 160°C
- Detector: RI detector
- Standard: Polystyrene (calibrated with a third-order function)

In an embodiment of the present disclosure, the crystallization temperature of the sealant resin and the crystallization temperature of the vent resin having a lower melting point than the sealant resin may be similar. For example, the difference between the crystallization temperature of the sealant resin and the crystallization temperature of the vent resin having a lower melting point than the sealant resin may be 10°C or less, or 5°C or less. In addition, the difference between the crystallization temperature of the sealant resin and the crystallization temperature of the vent resin may be 0.1°C or more. If the difference between the crystallization temperature of the sealant resin and the crystallization temperature of the vent resin satisfies the above range, the sealant resin and the vent resin may have improved fusion characteristic during normal operation of the battery.

In an embodiment of the present disclosure, the vent resin having a lower melting point than the sealant resin may have a crystallization temperature of 90°C to 115°C, or 95°C to 110°C, or 100°C to 110°C, or 105°C to 110°C. If the crystallization temperature of the vent resin satisfies the above range, the sealant resin and the vent resin may have improved fusion characteristics.

The crystallization temperature may be measured using a differential scanning calorimeter (DSC). For example, the temperature of the sample may be increased from 30°C to 280°C at 10°C/min, maintained at 280°C for 10 minutes, cooled to 30°C at 10°C/min, and then maintained at 30°C for 10 minutes. Then, after increasing the temperature of the sample from 30°C to 280°C at 10°C/min, the crystallization temperature may be measured by maintaining the temperature at 280°C for 10 minutes.

In an embodiment of the present disclosure, the vent member 15 may have a film shape.

The vent member 15 may be formed to have a predetermined thickness of a preset size. In addition, the vent member 15 may be inserted into the battery case 13 so that its insertion length may be varied, or its venting pressure and position may be controlled depending on the design requirements.

In an embodiment of the present disclosure, the vent member 15 may further include an adhesive layer for improved placement and sealing between the sealant resin and the vent resin having a lower melting point than the sealant resin.

In an embodiment of the present disclosure, the secondary battery may be a circular, prismatic, or pouch-type secondary battery.

## Claims

1. A secondary battery (10), comprising:
an electrode assembly (12);
an electrode lead (11) attached to the electrode assembly (12);
a battery case (13) including an accommodation portion (13a) to receive the electrode assembly (12) therein such that a portion of the electrode lead extends outside the battery case, the battery case including a sealing portion (13b) containing a sealant resin to form a seal at least partially around the electrode assembly (12);
a lead film (14) disposed around an outer surface of the electrode lead (11), the lead film (14) being interposed between the electrode lead (11) and the sealing portion (13b),
a vent member (15) containing a vent resin having a lower melting point than the sealant resin, the vent member at least partially overlapping or contacting the lead film,
wherein the vent member (15) is at least partially disposed within the sealing portion (13b) and extends to the accommodation portion (13a), the vent member (15) being spaced apart from the lead film (14) in the sealing portion (13b), the vent member (15) at least partially overlapping or contacting the lead film (14) in the accommodation portion (13a).

2. The secondary battery according to claim 1, wherein the electrode lead (11) extends away from the battery case along a Y-axis, the vent member including a first portion (15b) and a second portion (15a), the first portion (15b) extending along an X-axis orthogonal to the Y-axis between the lead film and the second portion (15a), the second portion extending along the Y-axis.

3. The secondary battery according to claim 2, wherein the vent member (15) defines an L shape.

4. The secondary battery according to claim 2, wherein the vent member includes a tapering section at an intersection of the first and second portions, the tapering section extending into the accommodation portion.

5. The secondary battery according to claim 2, wherein the first portion (15b) at least partially overlaps or contacts the lead film (14).

6. The secondary battery according to claim 2, wherein an outer end of the first portion (15b) is spaced apart from an inner end of the sealing portion (13b) adjacent a region where the electrode lead (11) extends away from the battery case (13), the first portion (15b) is located in the accommodation portion (13a).

7. The secondary battery according to claim 2, wherein the second portion (15a) does not overlap or contact the lead film (14).

8. The secondary battery according to claim 2, wherein the second portion (15a) defines a variable width, the variable width narrowing along the Y-axis.

9. The secondary battery according to claim 2, wherein the second portion (15a) defines a variable thickness, the variable thickness decreasing along the Y-axis.

10. The secondary battery according to any of claims 1 to 9, wherein a region of the vent member (15) overlapping or contacting the lead film is 1% to 30% of a region of the lead film not overlapping the electrode lead, the region where the lead film does not overlap the electrode lead being the sum of both regions of the electrode lead and the lead film that do not overlap.

11. The secondary battery according to any of claims 1 to 10, wherein the vent resin contains a linear low-density polyethylene having a comonomer with a carbon number of 6 or more.

12. The secondary battery according to any of claims 1 to 10, wherein the vent member has a melting point of 100°C to 120°C to vent gases from the accommodation portion to an exterior of the secondary battery, the melting point of the vent member being measured using a differential scanning calorimeter (DSC).

13. The secondary battery according to any of claims 1 to 12, wherein the vent member has a maximum sealing strength of less than 6 kgf/15 mm at 100°C or above, a sealing strength being measured for a part of the battery case of the sealing portion where the vent member is inserted and the maximum sealing strength defining a maximum value when the part of the battery case is broken.

14. The secondary battery according to any of claims 1 to 12, wherein the vent member has a maximum sealing strength of 6 kgf/15 mm or more at room temperature to 60°C, a sealing strength being measured for a part of the battery case of the sealing portion where the vent member is inserted and the maximum sealing strength defining a maximum value when the part of the battery case is broken.

15. The secondary battery according to claim 11, wherein a content of the comonomer with a carbon number of 6 or more is 15 weight% or less, based on 100 weight% of the linear low-density polyethylene, the content of the comonomer with a carbon number of 6 or more being measured using an H-NMR.

16. The secondary battery according to any of claims 1 to 15, wherein a difference between a crystallization temperature of the sealant resin and a crystallization temperature of the vent resin is 10°C or less, the crystallization temperature being measured using a differential scanning calorimeter (DSC).

17. The secondary battery according to any of claims 1 to 16, wherein the vent resin has a melting point of 100°C to 130°C, the melting point of the vent resin being measured using a differential scanning calorimeter (DSC)".

18. The secondary battery according to any of claims 1 to 17, wherein the secondary battery is a pouch-type secondary battery.

19. The secondary battery according to claim 11, wherein a content of the comonomer with the carbon number of 6 or more is from 5 weight% to 15 weight% based on 100 weight% of the linear low-density polyethylene, the content of the comonomer with a carbon number of 6 or more being measured using an H-NMR.

20. The secondary battery according to any of claims 1 to 11, wherein the vent member has a maximum sealing strength of less than 3 kgf/15 mm at 120°C or more, a sealing strength being measured for a part of the battery case of the sealing portion where the vent member is inserted and the maximum sealing strength defining a maximum value when the part of the battery case is broken.

## Patentansprüche

1. Sekundärbatterie (10), umfassend:
eine Elektrodenanordnung (12);
eine Elektrodenleitung (11), welche an der Elektrodenanordnung (12) angebracht ist;
ein Batteriegehäuse (13), welches einen Aufnahmeabschnitt (13a) umfasst, um die Elektrodenanordnung (12) derart darin aufzunehmen, dass sich ein Abschnitt der Elektrodenleitung außerhalb des Batteriegehäuses erstreckt, wobei das Batteriegehäuse einen Dichtungsabschnitt (13b) umfasst, welcher ein Dichtungsharz beinhaltet, um eine Dichtung wenigstens teilweise um die Elektrodenanordnung (12) zu bilden;
einen Leitungsfilm (14), welcher um eine äußere Fläche der Elektrodenleitung (11) angeordnet ist, wobei der Leitungsfilm (14) zwischen der Elektrodenleitung (11) und dem Dichtungsabschnitt (13b) eingefügt ist,
ein Entlüftungselement (15), welches ein Entlüftungsharz beinhaltet, welches einen niedrigeren Schmelzpunkt als das Dichtungsharz aufweist, wobei das Entlüftungselement den Leitungsfilm wenigstens teilweise überlappt oder kontaktiert,
wobei das Entlüftungselement (15) wenigstens teilweise in dem Dichtungsabschnitt (13b) angeordnet ist und sich zu dem Aufnahmeabschnitt (13a) erstreckt, wobei das Entlüftungselement (15) von dem Leitungsfilm (14) in dem Dichtungsabschnitt (13b) beabstandet ist, wobei das Entlüftungselement (15) den Leitungsfilm (14) in dem Aufnahmeabschnitt (13a) wenigstens teilweise überlappt oder kontaktiert.

2. Sekundärbatterie nach Anspruch 1, wobei sich die Elektrodenleitung (11) weg von dem Batteriegehäuse entlang einer Y-Achse erstreckt, wobei das Entlüftungselement einen ersten Abschnitt (15b) und einen zweiten Abschnitt (15a) umfasst, wobei sich der erste Abschnitt (15b) entlang einer X-Achse, welche orthogonal zu der Y-Achse ist, zwischen dem Leitungsfilm und dem zweiten Abschnitt (15a) erstreckt, wobei sich der zweite Abschnitt entlang der Y-Achse erstreckt.

3. Sekundärbatterie nach Anspruch 2, wobei das Entlüftungselement (15) eine L-Form definiert.

4. Sekundärbatterie nach Anspruch 2, wobei das Entlüftungselement einen sich verjüngenden Abschnitt an einem Übergang des ersten und des zweiten Abschnitts umfasst, wobei sich der sich verjüngende Abschnitt in den Aufnahmeabschnitt erstreckt.

5. Sekundärbatterie nach Anspruch 2, wobei der erste Abschnitt (15b) wenigstens teilweise den Leitungsfilm (14) überlappt oder kontaktiert.

6. Sekundärbatterie nach Anspruch 2, wobei ein äußeres Ende des ersten Abschnitts (15b) von einem inneren Ende des Dichtungsabschnitts (13b) beabstandet ist, welches benachbart zu einem Bereich ist, an welchem sich die Elektrodenleitung (11) weg von dem Batteriegehäuse (13) erstreckt, wobei sich der erste Abschnitt (15b) in dem Aufnahmeabschnitt (13a) befindet.

7. Sekundärbatterie nach Anspruch 2, wobei der zweite Abschnitt (15a) nicht den Leitungsfilm (14) überlappt oder kontaktiert.

8. Sekundärbatterie nach Anspruch 2, wobei der zweite Abschnitt (15a) eine variable Breite definiert, wobei die variable Breite sich entlang der Y-Achse verschmälert.

9. Sekundärbatterie nach Anspruch 2, wobei der zweite Abschnitt (15a) eine variable Dicke definiert, wobei die variable Dicke entlang der Y-Achse abnimmt.

10. Sekundärbatterie nach einem der Ansprüche 1 bis 9, wobei ein Bereich des Entlüftungselements (15), welcher den Leitungsfilm überlappt oder kontaktiert, 1 % bis 30 % eines Bereichs des Leitungsfilms ist, welcher nicht die Elektrodenleitung überlappt, wobei der Bereich, in welchem der Leitungsfilm nicht die Elektrodenleitung überlappt, die Summe beider Regionen aus der Elektrodenleitung und dem Leitungsfilm ist, welche sich nicht überlappen.

11. Sekundärbatterie nach einem der Ansprüche 1 bis 10, wobei das Entlüftungsharz ein lineares Polyethylen niedriger Dichte beinhaltet, welches ein Comonomer mit einer Kohlenstoffzahl von 6 oder mehr aufweist.

12. Sekundärbatterie nach einem der Ansprüche 1 bis 10, wobei das Entlüftungselement einen Schmelzpunkt von 100 °C bis 120 °C aufweist, um Gase aus dem Aufnahmeabschnitt an ein Äußeres der Sekundärbatterie zu entlüften, wobei der Schmelzpunkt des Entlüftungselements unter Verwendung eines Differentialabtastkalorimeters (DSC) gemessen wird.

13. Sekundärbatterie nach einem der Ansprüche 1 bis 12, wobei das Entlüftungselement eine maximale Dichtungsstärke von weniger als 6 kgf/15 mm bei 100 °C oder darüber aufweist, wobei eine Dichtungsstärke für einen Teil des Batteriegehäuses des Dichtungsabschnitts gemessen wird, an welchem das Entlüftungselement eingeführt ist, und wobei die maximale Dichtungsstärke einen maximalen Wert definiert, wenn der Teil des Batteriegehäuses beschädigt wird.

14. Sekundärbatterie nach einem der Ansprüche 1 bis 12, wobei das Entlüftungselement eine maximale Dichtungsstärke von 6 kgf/15 mm oder mehr bei Raumtemperatur bis 60 °C aufweist, wobei eine Dichtungsstärke für einen Teil des Batteriegehäuses des Dichtungsabschnitts gemessen wird, an welchem das Entlüftungselement eingeführt ist, und wobei die maximale Dichtungsstärke einen maximalen Wert definiert, wenn der Teil des Batteriegehäuses beschädigt wird.

15. Sekundärbatterie nach Anspruch 11, wobei ein Gehalt des Comonomers mit einer Kohlenstoffzahl von 6 oder mehr 15 Gewichts% oder weniger beträgt, basierend auf 100 Gewichts% des linearen Polyethylens niedriger Dichte, wobei der Gehalt des Comonomers mit einer Kohlenstoffzahl von 6 oder mehr unter Verwendung eines H-NMR gemessen wird.

16. Sekundärbatterie nach einem der Ansprüche 1 bis 15, wobei eine Differenz zwischen einer Kristallisationstemperatur des Dichtungsharzes und einer Kristallisationstemperatur des Entlüftungsharzes 10 °C oder weniger ist, wobei die Kristallisationstemperatur unter Verwendung eines Differentialabtastkalorimeters (DSC) gemessen wird.

17. Sekundärbatterie nach einem der Ansprüche 1 bis 16, wobei das Entlüftungsharz einen Schmelzpunkt von 100 °C bis 130 °C aufweist, wobei der Schmelzpunkt des Entlüftungsharzes unter Verwendung eines Differentialabtastkalorimeters (DSC) gemessen wird.

18. Sekundärbatterie nach einem der Ansprüche 1 bis 17, wobei die Sekundärbatterie eine Sekundärbatterie vom Beuteltyp ist.

19. Sekundärbatterie nach Anspruch 11, wobei ein Gehalt des Comonomers mit der Kohlenstoffzahl von 6 oder mehr von 5 Gewichts% bis 15 Gewichts% ist, basierend auf 100 Gewichts% des linearen Polyethylens niedriger Dichte, wobei der Gehalt des Comonomers mit einer Kohlenstoffzahl von 6 oder mehr unter Verwendung eines H-NMR gemessen wird.

20. Sekundärbatterie nach einem der Ansprüche 1 bis 11, wobei das Entlüftungselement eine maximale Dichtungsstärke von weniger als 3 kgf/15 mm bei 120 °C oder darüber aufweist, wobei eine Dichtungsstärke für einen Teil des Batteriegehäuses des Dichtungsabschnitts gemessen wird, an welchem das Entlüftungselement eingeführt ist, und wobei die maximale Dichtungsstärke einen maximalen Wert definiert, wenn der Teil des Batteriegehäuses beschädigt wird.

## Revendications

1. Batterie secondaire (10), comprenant :
un ensemble d'électrodes (12) ;
un fil d'électrode (11) fixé à l'ensemble d'électrodes (12) ;
un boîtier de batterie (13) comprenant une portion de logement (13a) pour recevoir l'ensemble d'électrodes (12) dans celui-ci de telle sorte qu'une portion du fil d'électrode s'étende à l'extérieur du boîtier de batterie, le boîtier de batterie comprenant une portion d'étanchéité (13b) contenant une résine d'étanchéité pour former un joint au moins partiellement autour de l'ensemble d'électrodes (12) ;
un film de fil (14) disposé autour d'une surface extérieure du fil d'électrode (11), le film de fil (14) étant interposé entre le fil d'électrode (11) et la portion d'étanchéité (13b),
un élément d'évacuation (15) contenant une résine d'évacuation ayant un point de fusion inférieur à la résine d'étanchéité, l'élément d'évacuation recouvrant ou entrant en contact au moins partiellement avec le film de fil,
dans laquelle l'élément d'évacuation (15) est disposé au moins partiellement dans la portion d'étanchéité (13b) et s'étend jusqu'à la portion de logement (13a), l'élément d'évacuation (15) étant espacé du film de fil (14) dans la portion d'étanchéité (13b), l'élément d'évacuation (15) recouvrant ou entrant en contact au moins partiellement avec le film de fil (14) dans la portion de logement (13a).

2. Batterie secondaire selon la revendication 1, dans laquelle le fil d'électrode (11) s'étend loin du boîtier de batterie le long d'un axe Y, l'élément d'évacuation comprenant une première portion (15b) et une seconde portion (15a), la première portion (15b) s'étendant le long d'un axe X orthogonal à l'axe Y entre le film de fil et la seconde portion (15a), la seconde portion s'étendant le long de l'axe Y.

3. Batterie secondaire selon la revendication 2, dans laquelle l'élément d'évacuation (15) définit une forme de L.

4. Batterie secondaire selon la revendication 2, dans laquelle l'élément d'évacuation comprend une section effilée à une intersection des première et seconde portions, la section effilée s'étendant dans la portion de logement.

5. Batterie secondaire selon la revendication 2, dans laquelle la première portion (15b) recouvre ou entre en contact au moins partiellement avec le film de fil (14).

6. Batterie secondaire selon la revendication 2, dans laquelle une extrémité extérieure de la première portion (15b) est espacée d'une extrémité intérieure de la portion d'étanchéité (13b) adjacente à une région où le fil d'électrode (11) s'étend loin du boîtier de batterie (13), la première portion (15b) est située dans la portion de logement (13a).

7. Batterie secondaire selon la revendication 2, dans laquelle la seconde portion (15a) ne chevauche pas ou n'entre pas en contact avec le film de fil (14).

8. Batterie secondaire selon la revendication 2, dans laquelle la seconde portion (15a) définit une largeur variable, la largeur variable se rétrécissant le long de l'axe Y.

9. Batterie secondaire selon la revendication 2, dans laquelle la seconde portion (15a) définit une épaisseur variable, l'épaisseur variable diminuant le long de l'axe Y.

10. Batterie secondaire selon l'une quelconque des revendications 1 à 9, dans laquelle une région de l'élément d'évacuation (15) recouvrant ou entrant en contact avec le film de fil représente 1 % à 30 % d'une région du film de fil ne recouvrant pas le fil d'électrode, la région où le film de fil ne recouvre pas le fil d'électrode étant la somme des deux régions du fil d'électrode et du film de fil qui ne se recouvrent pas.

11. Batterie secondaire selon l'une quelconque des revendications 1 à 10, dans laquelle la résine d'évacuation contient un polyéthylène basse densité linéaire ayant un comonomère avec un nombre d'atomes de carbone de 6 ou plus.

12. Batterie secondaire selon l'une quelconque des revendications 1 à 10, dans laquelle l'élément d'évacuation a un point de fusion de 100 °C à 120 °C pour évacuer des gaz depuis la portion de logement jusqu'à un extérieur de la batterie secondaire, le point de fusion de l'élément d'évacuation étant mesuré à l'aide d'un calorimètre différentiel à balayage (DSC).

13. Batterie secondaire selon l'une quelconque des revendications 1 à 12, dans laquelle l'élément d'évacuation a une résistance d'étanchéité maximale de moins de 6 kgf/15 mm à 100 °C ou plus, une résistance d'étanchéité étant mesurée pour une partie du boîtier de batterie de la portion d'étanchéité où l'élément d'évacuation est inséré et la résistance d'étanchéité maximale définissant une valeur maximale lorsque la partie du boîtier de batterie est cassée.

14. Batterie secondaire selon l'une quelconque des revendications 1 à 12, dans laquelle l'élément d'évacuation a une résistance d'étanchéité maximale de 6 kgf/15 mm ou plus à température ambiante jusqu'à 60 °C, une résistance d'étanchéité étant mesurée pour une partie du boîtier de batterie de la portion d'étanchéité où l'élément d'évacuation est inséré et la résistance d'étanchéité maximale définissant une valeur maximale lorsque la partie du boîtier de batterie est cassée.

15. Batterie secondaire selon la revendication 11, dans laquelle une teneur en comonomère avec un nombre d'atomes de carbone de 6 ou plus est de 15 % en poids ou moins, sur la base de 100 % en poids du polyéthylène basse densité linéaire, la teneur en comonomère avec un nombre d'atomes de carbone de 6 ou plus étant mesurée à l'aide d'une RMN H.

16. Batterie secondaire selon l'une quelconque des revendications 1 à 15, dans laquelle une différence entre une température de cristallisation de la résine d'étanchéité et une température de cristallisation de la résine d'évacuation est de 10 °C ou moins, la température de cristallisation étant mesurée à l'aide d'un calorimètre différentiel à balayage (DSC).

17. Batterie secondaire selon l'une quelconque des revendications 1 à 16, dans laquelle la résine d'évacuation a un point de fusion de 100 °C à 130 °C, le point de fusion de la résine d'évacuation étant mesuré à l'aide d'un calorimètre différentiel à balayage (DSC).

18. Batterie secondaire selon l'une quelconque des revendications 1 à 17, dans laquelle la batterie secondaire est une batterie secondaire de type poche.

19. Batterie secondaire selon la revendication 11, dans laquelle une teneur en comonomère avec un nombre d'atomes de carbone de 6 ou plus est de 5 % en poids à 15 % en poids sur la base de 100 % en poids du polyéthylène basse densité linéaire, la teneur en comonomère avec un nombre d'atomes de carbone de 6 ou plus étant mesurée à l'aide d'une RMN H.

20. Batterie secondaire selon l'une quelconque des revendications 1 à 11, dans laquelle l'élément d'évacuation a une résistance d'étanchéité maximale de moins de 3 kgf/15 mm à 120°C ou plus, une résistance d'étanchéité étant mesurée pour une partie du boîtier de batterie de la portion d'étanchéité où l'élément d'évacuation est inséré et la résistance d'étanchéité maximale définissant une valeur maximale lorsque la partie du boîtier de batterie est cassée.
